# EUROPEAN PATENT APPLICATION

(11) **EP 2 355 426 A1**
(43) Date of publication of application: **10.08.2011**
(21) Application number: 11150601.0
(22) Date of filing: 11.01.2011
(51) Int. Cl.: H04L 12/58

(54) **Apparatus and method for sharing schedule information between mobile terminals in mobile communication system**

(30) Priority: 29.01.2010 KR 20100008808
(71) Applicant: PANTECH CO., LTD., Seoul 121-270 (KR)
(72) Inventor: Woen, Jin-Yeon, Seoul (KR); Kang, Tae-Kyoung, Seoul (KR); Moon, Sung-Yeon, Seoul (KR); Baek, Young-Cheon, Gyeonggi-do (KR); Li, Yu-Mi, Seoul (KR); Lee, Hyun-Mook, Gyeonggi-do (KR)
(74) Representative: Herzog, Markus

(57) **Abstract**

In an apparatus and method for sharing schedule information between mobile terminals, a sending mobile terminal transmits schedule information input by a user to a receiving mobile terminal. A schedule management server monitors a position of the sending mobile terminal according to the schedule information. If the current position of the sending mobile terminal is different from position information included in the schedule information, schedule change information is transmitted to the receiving mobile terminal, which outputs the schedule information.

## Description

### CROSS-REFERENCE TO RELATED APPLICATION

This application claims priority from and the benefit under 35 U.S.C. §119(a) of Korean Patent Application No. 10-2010-0008808, filed on January 29, 2010, which is hereby incorporated by reference for all purposes as if fully set forth herein.

### BACKGROUND

1. Field

The following description relates to a mobile communication system and, more particularly, to an apparatus and a method for sharing schedule information between mobile terminals in a mobile communication system.

2. Discussion of the Background

In mobile communication technology, communication services, such as exchange of a variety of information between mobile terminals, are offered in addition to voice call services between mobile terminals. An example of a communication service is a service for sharing schedule information between mobile terminals.

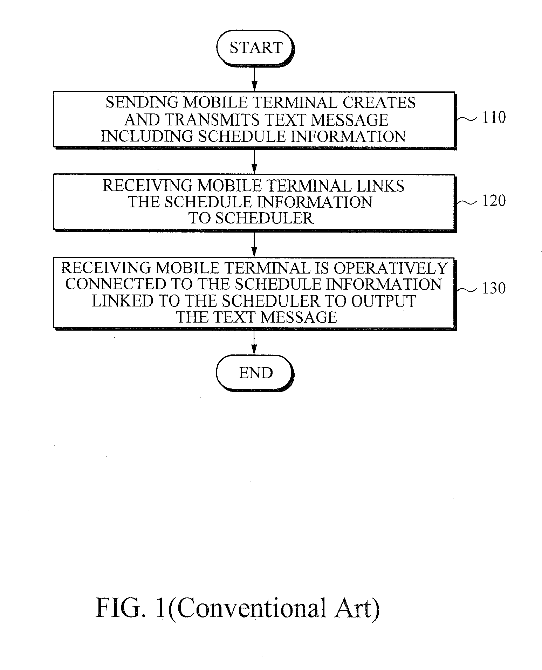

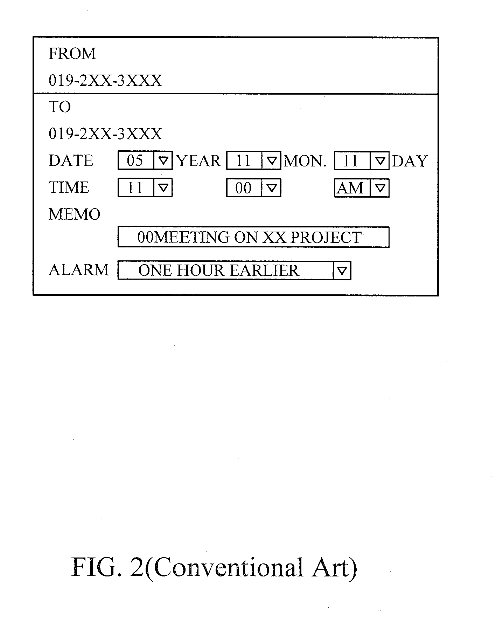

A conventional technique of sharing schedule information between mobile terminals will be described with reference to FIG. 1 and FIG. 2.

FIG. 1 is a flowchart illustrating a method for sharing schedule information according to the prior art.

Referring to FIG. 1, in operation 110, a sending mobile terminal creates and sends a text message containing schedule information to a receiving mobile terminal.

FIG. 2 illustrates an example of a text message created by the sending mobile terminal. The text message may include a phone number of the receiving mobile terminal, date, time, event, alarm time, etc.

In operation 120, the receiving mobile terminal receives the text message and links the schedule information in the text message to a scheduler. In operation 130, the receiving mobile terminal outputs the schedule information linked to the scheduler to a screen. In operation 130, if the schedule information in the text message is linked to an alarm unit, the receiving mobile terminal is set to output the schedule information at a preset alarm time.

In this case, whenever the schedule information is changed, a new text message needs to be created and transmitted.

Further, if a user of a sending mobile terminal does not inform a user of a receiving mobile terminal of his or her unexpected change of schedule, the receiving mobile terminal user will be unaware of the changed schedule.

Further, since the schedule information includes a single schedule, multiple text messages need to be created to inform another user of multiple schedules.

Further, the schedule information only provides data limited to date, time, event and alarm time.

### SUMMARY

Exemplary embodiments provide an apparatus and a method for sharing schedule information that are capable of checking changed schedules without a user's input.

Exemplary embodiments provide an apparatus and a method for sharing schedule information that are capable of inputting and sending a plurality of schedules.

Exemplary embodiments provide an apparatus and a method for sharing schedule information in various formats.

Additional features of the invention will be set forth in the description which follows, and in part will be apparent from the description, or may be learned by practice of the invention.

An exemplary embodiment of the present invention discloses a first mobile terminal to share schedule information with a second mobile terminal, including: a communication unit to process communication signals and to receive schedule information of the second mobile terminal; a display unit to display images; and a control unit to output the schedule information of the second mobile terminal to the display unit, and to output a signal indicating that the schedule information on the display unit is changed when information about a schedule change of the second mobile terminal is received from a schedule management server.

An exemplary embodiment of the present invention discloses a schedule management server to share schedule information between mobile terminals in a mobile communication system, the schedule management server including: a schedule information registering module to register first schedule information received from a sending mobile terminal; and a position monitoring module to monitor a position of the sending mobile terminal and to transmit schedule change information to a receiving mobile terminal if the position of the sending mobile terminal is different from position information included in the first schedule information.

An exemplary embodiment of the present invention discloses a method for sharing schedule information of a mobile terminal, the method including: displaying a first character representing a first schedule of a sending mobile terminal on a screen when schedule information of the sending mobile terminal is received; and outputting through the first character a signal indicating that the schedule information is changed when information about a change in the first schedule of the sending mobile terminal is received from a schedule management server.

An exemplary embodiment of the present invention discloses a method of for sharing schedule information between mobile terminals in a mobile communication system, the method including: registering schedule information received from a sending mobile terminal; monitoring a position of the sending mobile terminal; and transmitting schedule change information to a receiving mobile terminal when the position of the sending mobile terminal is different from position information included in the schedule information.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a flowchart illustrating a method for sharing schedule information according to the prior art.

FIG. 2 illustrates an example of a text message of schedule information which is sent by a sending mobile terminal according to the prior art.

FIG. 3 is a schematic diagram illustrating a network system according to an exemplary embodiment of the present invention.

FIG. 4 illustrates an example of a schedule format according to an exemplary embodiment of the present invention.

FIG. 5 illustrates a screen of a receiving mobile terminal that displays characters corresponding to schedule information of sending mobile terminals according to an exemplary embodiment of the present invention.

FIG. 6A, FIG. 6B, and FIG. 6C illustrate a screen of a receiving mobile terminal that displays a changed schedule of a sending mobile terminal determined based on position information of the sending mobile terminal according to an exemplary embodiment of the present invention.

FIG. 7 is a block diagram illustrating a mobile terminal according to an exemplary embodiment of the present invention.

FIG. 8 is a block diagram illustrating a schedule management server according to an exemplary embodiment of the present invention.

FIG. 9 is a signal flowchart illustrating a method for sharing schedule information between mobile terminals according to an exemplary embodiment of the present invention.

FIG. 10 is a flowchart illustrating operation of a schedule management server in operation 930 in FIG. 9 according to an exemplary embodiment of the present invention.

FIG. 11 is a flowchart illustrating operation of a receiving mobile terminal in operation 940 in FIG. 9 according to an exemplary embodiment of the present invention.

FIG. 12 is a flowchart illustrating operation of a receiving mobile terminal in operation 950 in FIG. 9 according to an exemplary embodiment of the present invention.

FIG. 13A and FIG. 13B illustrate examples of a screen of a receiving mobile terminal for showing characters which are changed as time elapses.

FIG. 14 is a flowchart illustrating operation of a schedule management server in operation 960 in FIG. 9 according to an exemplary embodiment of the present invention.

FIG. 15 is a flowchart illustrating operation of a receiving mobile terminal in operation 950 in FIG. 9 according to an exemplary embodiment of the present invention.

FIG. 16 is a flowchart illustrating a method of sharing schedule information of acquaintances of a user using a sending mobile terminal according to an exemplary embodiment of the present invention.

FIG. 17A illustrates a schedule format for schedule information of acquaintances of a user according to an exemplary embodiment of the present invention.

FIG. 17B illustrates a screen of a receiving mobile terminal which displays characters corresponding to schedule information of acquaintances of a user using a sending mobile terminal according to an exemplary embodiment of the present invention.

FIG. 18 is a flowchart illustrating a method for sharing schedule information of a specific person according to an exemplary embodiment of the present invention.

FIG. 19A, FIG. 19B, and FIG. 19C illustrate examples of a screen of a sending mobile terminal for setting a target to open schedule information of a specific person according to an exemplary embodiment of the present invention.

### DETAILED DESCRIPTION

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements. Throughout the drawings and the detailed description, unless otherwise described, the same drawing reference numerals will be understood to refer to the same elements, features, and structures. The relative size and depiction of these elements may be exaggerated for clarity, illustration, and convenience.

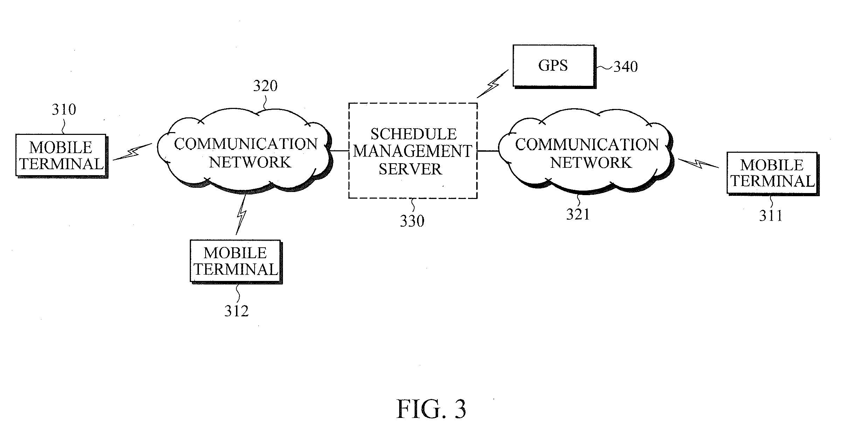

FIG. 3 is a schematic diagram illustrating a network system according to an exemplary embodiment of the present invention.

Referring to FIG. 3, mobile terminals 310, 311 and 312 may share schedule information by sending or receiving respective schedule information to or from one another. The schedule information may be transmitted over a communication network 320 between the mobile terminals 310 and 312 or may be transmitted through a schedule management server 330 between the mobile terminals 310 (or 312) and 311. In order to use the schedule management server 330, the mobile terminals 310 and 311 may be preregistered with the schedule management server 330. In this case, the schedule management server 330 transmits the schedule information to mobile terminals which are scheduled to receive the schedule information or which have requested the schedule information.

For convenience of description, the mobile terminal 310, 311, and 312 may each be a sending mobile terminal or a receiving mobile terminal. However, in practice, the mobile terminals 310, 311 and 312 may each be operated as both a sending mobile terminal and a receiving mobile terminal according to the transmission of schedule information.

The schedule management server 330 may be operatively connected to, for example, a global positioning system (GPS) 340 to monitor a position of a sending mobile terminal at regular intervals. The position may be a current position of the sending mobile terminal. The schedule management server 330 may continuously receive a position of the sending mobile terminal. Alternatively, the schedule management server 330 may receive a current location of a sending mobile terminal from a component of the communication network 320 or 321, such as a base station, that indirectly or directly monitors a position of the sending mobile terminal, either through GPS, triangulation, assisted-GPS, a combination thereof, or another process.

The sending mobile terminal may preregister schedule information with the schedule management server 330. The schedule management server 330 determines if the schedule information has been changed, and informs the receiving mobile terminal of the result. In this case, the schedule management server 330 may make the determination based on position information included in the schedule information and the determined current position information of the sending mobile terminal. More specifically, if the current position information of the sending mobile terminal is different from a prearranged position included in the schedule information, the schedule management server 330 may determine that the sending mobile terminal does not observe the prearranged schedule, and informs the receiving mobile terminal of the changed schedule. The schedule management server 330 may inform the receiving mobile terminal of the current position information of the sending mobile terminal if authorized by the sending mobile terminal. The schedule management server 330 may receive such authorization before or after determining that the sending mobile terminal does not observe the prearranged schedule. For example, if the sending mobile terminal's user is running late for an appointment, the receiving mobile terminal's user may request a status, such as current position, of the sending mobile terminal from the schedule management server 330. In this instance, the schedule management server 330 may check whether there is authority to disclose the sending mobile terminal's position, and if so, may transmit the sending mobile terminal's position to the receiving mobile terminal. In this manner, the receiving mobile terminal's user may consider whether the sending mobile terminal's user will be able to make the appointment, or whether the appointment should be rescheduled.

Even though the schedule information has not been changed, the schedule management server 330 may provide the receiving mobile terminal with the current position data of the sending mobile terminal in real time. This may occur at the request of the receiving mobile terminal.

Each of the mobile terminals 310, 311 and 312 may store a scheduler program, which may be downloaded from an online source, for example. The scheduler program provides a schedule format according to an exemplary embodiment of the invention.

The sending mobile terminal uses the scheduler program to display a schedule format on a screen so that a user may enter schedule information for multiple schedules or appointments through the schedule format.

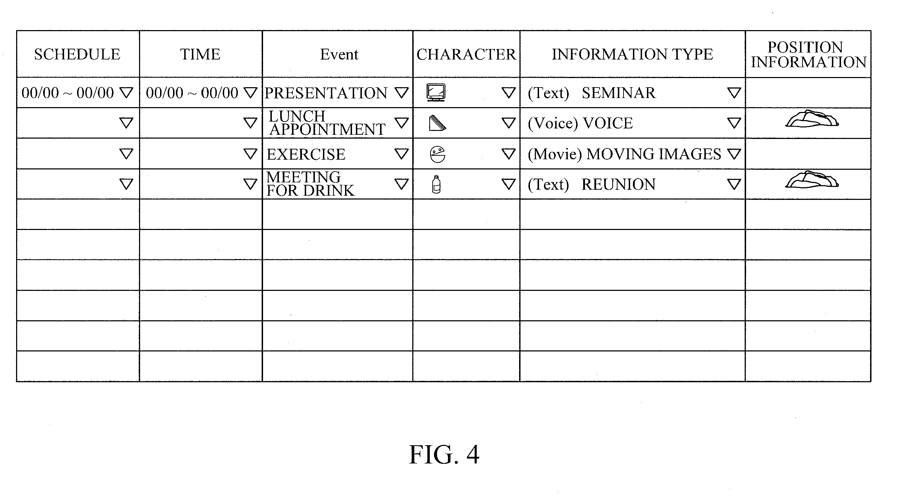

FIG. 4 illustrates an example of a schedule format according to an exemplary embodiment of the present invention.

Referring to FIG. 4, the schedule format has columns to input information related to multiple schedules or appointments. Each schedule or appointment may include items of 'Time', 'Event', 'Character', 'Information Type', 'Position Information', etc.

The schedule column shows a specific date. The item 'Time' shows a specific time. The item 'Event' shows content or description of the schedule, such as lunch appointment or exercise, at the specific date and time.

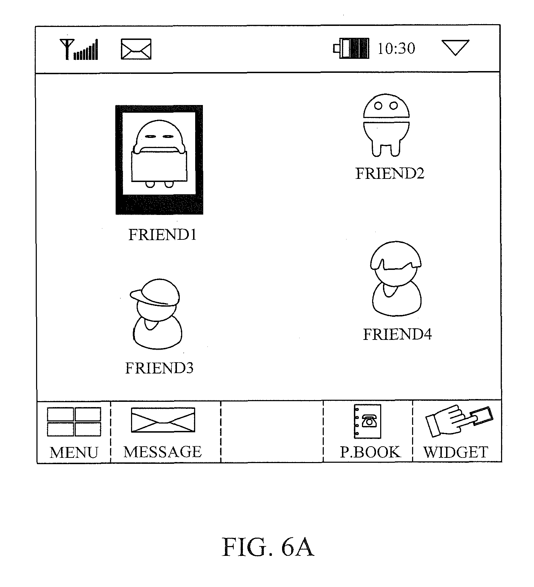

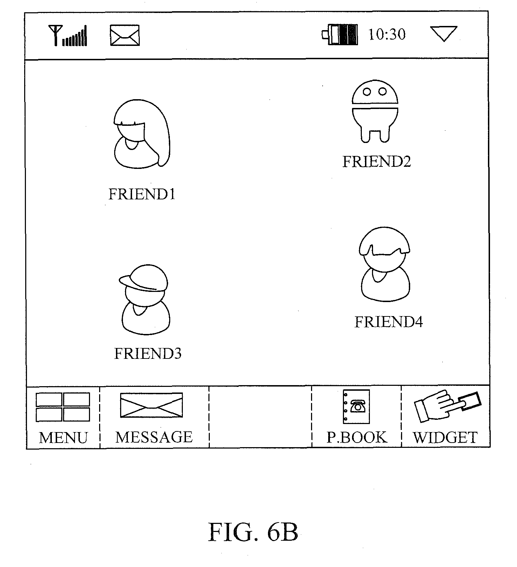

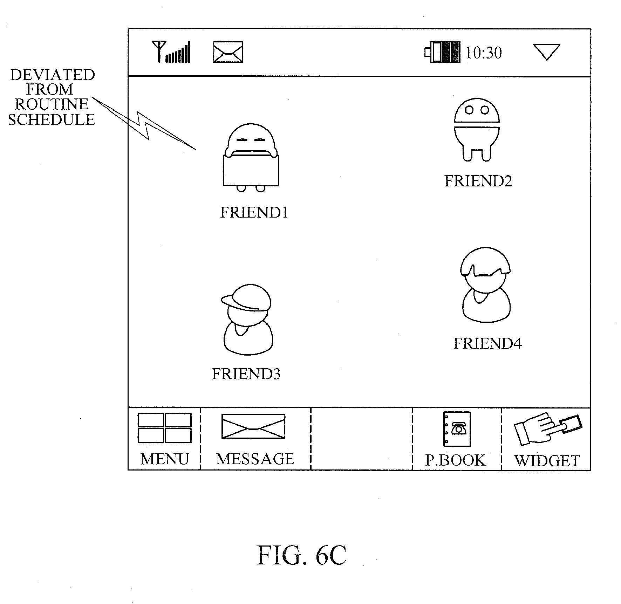

The item 'Character' shows a set of characters or icons to be selected to represent the event. For example, as shown in FIG. 6, if the item 'Event' is set to a lunch appointment, a sandwich character may be selected to graphically represent the appointment. The item 'Information Type' may show alarm types to signal the schedule. For example, as shown in FIG. 6, if the item 'Event' is set to exercise, a moving image of doing exercise may be selected. The item 'Position Information' shows a location where the event takes place.

The schedule format may include acquaintance information, such as personal or schedule information of acquaintances of a user using the sending mobile terminal.

The sending mobile terminal may use the schedule format to set priorities of schedules which take place at the same time or overlap for a portion of time.

In this case, the schedule management server 330 may register the schedule information, including each of the multiple schedules or appointments included therein or each of the multiple schedules or appointments included therein according to criteria such as a user selection or a set chronological period, according to the priorities and transmit a top priority of the schedules to the receiving mobile terminal. If a current position of a sending mobile terminal is different from position information corresponding to the first priority of the schedules at a specific time, the schedule management server 330 may send a second priority of the schedules to the receiving mobile terminal.

When receiving the schedule information of the sending mobile terminal user which has been input using the schedule format, the receiving mobile terminal stores the schedule information and displays a character corresponding to an event on a current schedule included in the schedule information on a screen. The character may be selected by the sending mobile terminal user or may be provided by the receiving mobile terminal.

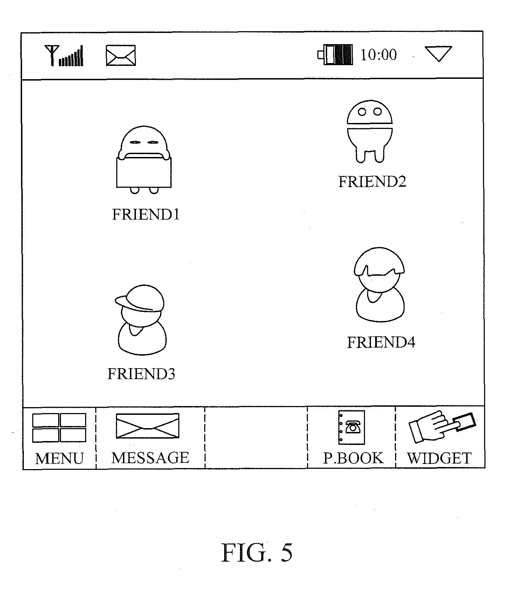

FIG. 5 illustrates a screen of a receiving mobile terminal that displays characters corresponding to schedule information of sending mobile terminals according to an exemplary embodiment of the present invention.

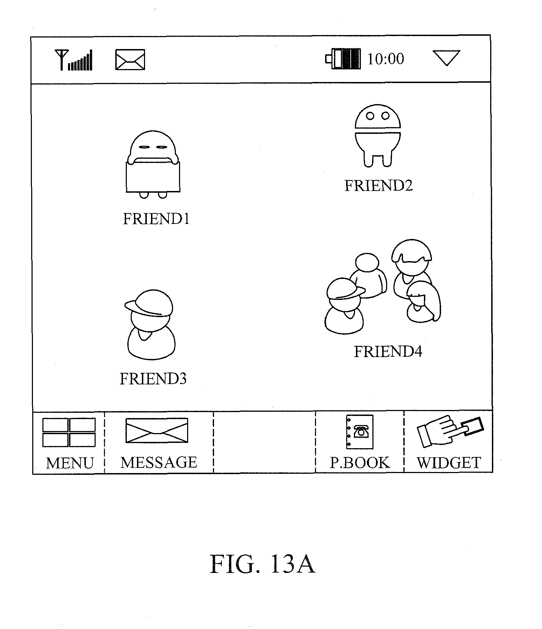

Referring to FIG. 5, the receiving mobile terminal displays four characters respectively corresponding to schedule information received from four sending mobile terminals, Friend 1, Friend 2, Friend 3 and Friend 4. For example, as shown in FIG. 13A and described in more detail below, a character, such as the character of Friend 4, may represent a plurality of people. In this case, a current schedule of a sending mobile terminal user corresponding to the Friend 4 may be a meeting for drink with multiple people, for example.

When receiving changed schedule information and position information of the current sending mobile terminal from the schedule management server 330, the receiving mobile terminal may output a character which is visually changed or may sound an alarm to notify the receiving mobile terminal's user of the change.

FIG. 6A, FIG. 6B, and FIG. 6C illustrate a screen of a receiving mobile terminal that displays a changed schedule of a sending mobile terminal according to an exemplary embodiment of the present invention. The changed schedule may have been received from the schedule management server 330.

For example, when a current position of a sending mobile terminal user corresponding to Friend 1 has been changed, FIG. 6A shows a blinking character with a changed background color, FIG. 6B shows a character which is blinking and changed to a different character, and FIG. 6C shows that an alarm is sounded to indicate that the sending mobile. terminal has deviated from a prearranged schedule. In FIG. 6C, there is no visual change, however, the alarm could be combined with a visual change to the character as well.

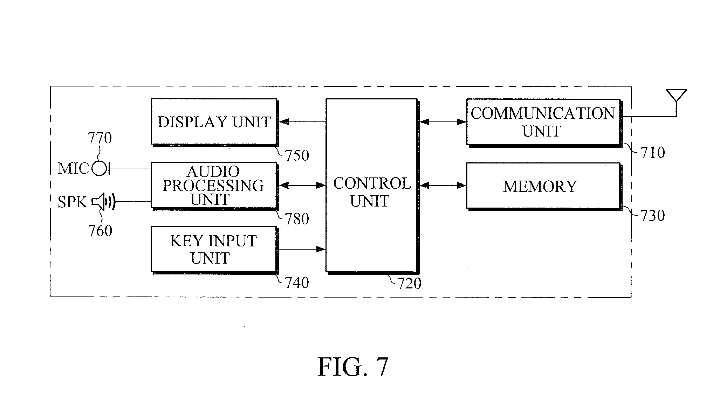

FIG. 7 is a block diagram of a mobile terminal according to an exemplary embodiment of the present invention.

A communication unit 710 includes an antenna and an RF circuitry for processing signals received over a communication network and internal and/or output signals.

A memory 730 may be a flash memory for storing a scheduler program and schedule information transmitted from the schedule management server 330 or the receiving mobile terminal through the communication unit 710.

A key input unit 740 is an interface, such as a microphone or a touch screen, for a user to enter information. Although the microphone is shown in FIG. 7 as MIC 770, this microphone may be an interface used by the key input unit 740, may be a separate microphone for receiving an audio sound from a user, or may perform both functions. A display unit 750 displays still or moving images. An audio processing unit 780 converts sound data into an audible sound and outputs the audible sound through a speaker 760.

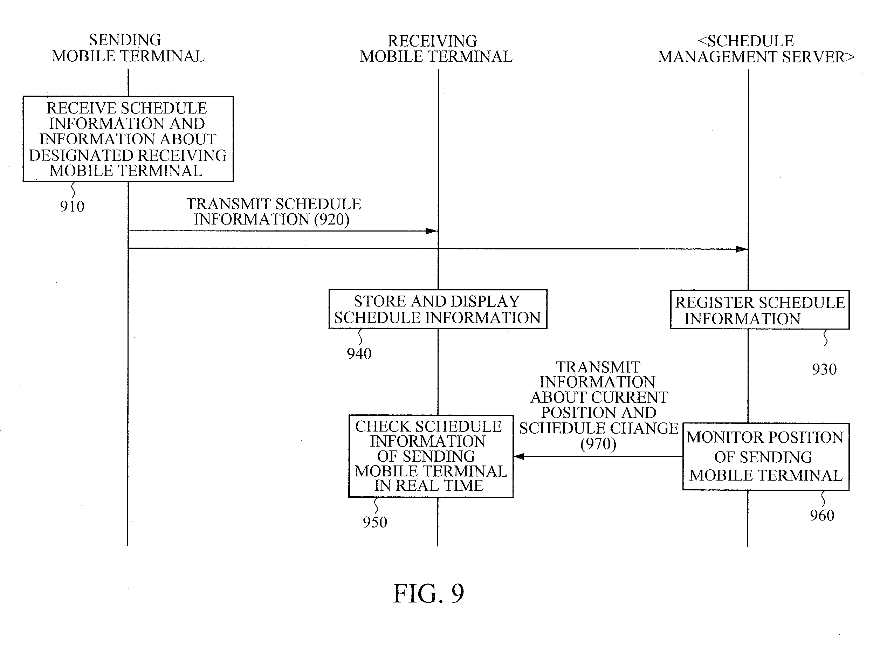

A control unit 720 controls components of the mobile terminal to receive schedule information from a user using the schedule format and to transmit the schedule information to a receiving mobile terminal or the schedule management server 330 through the communication unit 710. Further, the control unit 720 outputs a character corresponding to schedule information received from the receiving mobile terminal to the display unit 750, outputs a character corresponding to schedule information received through the communication unit 710 from the sending mobile terminal to the display unit 750, and outputs changed schedule information received from the schedule management server 330 to the display unit 750 or the speaker 760. The operation of the control unit 720 will be described in more detail with reference to FIG. 9.

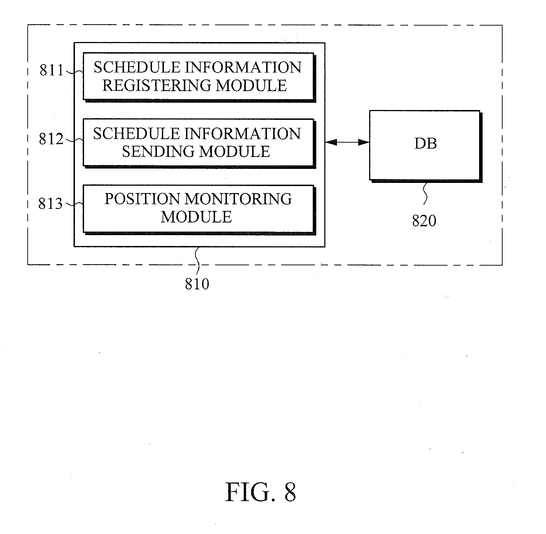

FIG. 8 is a block diagram illustrating the schedule management server 330 according to an exemplary embodiment of the present invention.

A schedule information registering module 811 stores the schedule information from the sending mobile terminal in a database (DB) 820. If the schedule information includes position information, the schedule information registering module 811 may be operatively connected to a GPS to monitor position information of mobile terminals. A schedule information sending module 812 transmits the schedule information to a receiving mobile terminal, and this transmission may be upon request of the receiving mobile terminal or the sending mobile terminal. A position monitoring module 813 monitors a current position of a sending mobile terminal. The position monitoring module 813 checks if the current position is identical to or corresponds to position data included in the registered schedule information, and sends the result to a receiving mobile terminal.

Exemplary embodiments of sharing schedule information between mobile terminals in the network system will now be described.

FIG. 9 is a flow chart illustrating a method for sharing schedule information between mobile terminals according to an exemplary embodiment of the present invention.

Referring to FIG. 9, in operation 910, a sending mobile terminal receives schedule information and information about a designated receiving mobile terminal from a user. In operation 920, the sending mobile terminal sends the scheduling information to a schedule management server or a receiving mobile terminal.

On the other hand, in operation 920, the sending mobile terminal may selectively send the schedule information to the schedule management server depending on whether the schedule information includes position information. Although FIG. 9 illustrates that the schedule information is sent to a single receiving mobile terminal, the schedule information may be sent to a plurality of receiving mobile terminals.

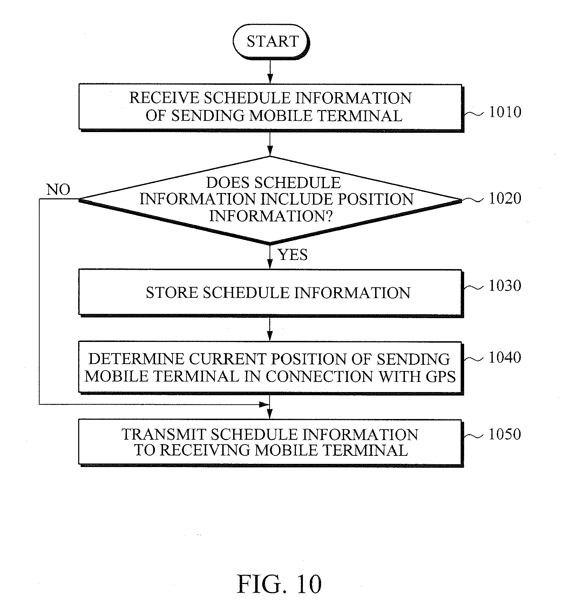

In operation 930, the schedule management server registers the received schedule information. The operation 930 may include a plurality of operations as shown in FIG. 10. FIG. 10 is a flowchart illustrating operation of a schedule management server in operation 930 in FIG. 9 according to an exemplary embodiment of the present invention.

Referring to FIG. 10, in operation 1010, the schedule management server receives the schedule information of the sending mobile terminal. In operation 1020, the schedule management server determines if the schedule information includes position information. If the schedule information is determined to include the position information in operation 1020, the schedule management server stores the schedule information in operation 1030. In operation 1040, the schedule management server determines a current position of the sending mobile terminal, such as by using an operative connection to GPS or receiving position information from the communication network 320/321. In operation 1050, the schedule management server sends the schedule information to the receiving mobile terminal. In operation 1020, if the schedule information is determined not to include the position information, the schedule management server sends the schedule information to the receiving mobile terminal in operation 1050 without performing operations 1030 and 1040.

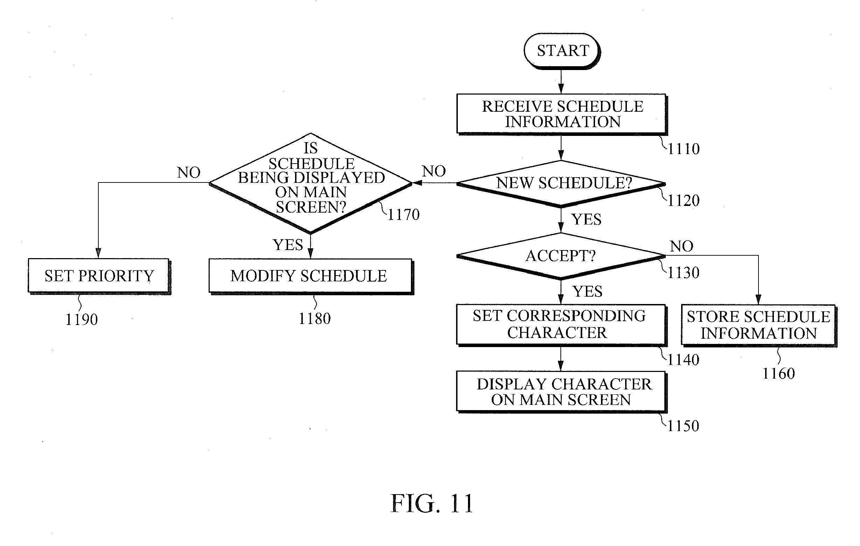

Returning to FIG. 9, in operation 940, the receiving mobile terminal stores the schedule information of the sending mobile terminal and displays the schedule information on a screen so that the user may check the schedule information of the sending mobile terminal in real time. The operation 940 may include a plurality of operations as shown in FIG. 11. FIG. 11 is a flowchart illustrating operation of a receiving mobile terminal in operation 940 in FIG. 9 according to an exemplary embodiment of the present invention.

Referring to FIG. 11, in operation 1110, the receiving mobile terminal receives the schedule information of the sending mobile terminal. In operation 1120, the receiving mobile terminal determines if the schedule information is new. That is, the receiving mobile terminal determines if the sending mobile terminal has previously sent the schedule information.

If the schedule information is determined to be new in operation 1120, the receiving mobile terminal determines whether to receive the new schedule information to determine whether to display a character representing the schedule information on the screen. The determination may be made depending on the user's response to a message of the receiving mobile terminal inquiring whether the user wishes to receive the schedule information.

If the receiving mobile terminal is determined to receive the schedule information in operation 1130, the receiving mobile terminal sets a character corresponding to the schedule information of the sending mobile terminal in operation 1140. The character may be selected by the sending mobile terminal or by the receiving mobile terminal. For example, the character may be set as a default value by the receiving mobile terminal, may be set by the receiving mobile terminal in response to a user selection, or may be set as a predefined character corresponding to the sending mobile terminal, such as an icon or picture displayed as part of a caller-ID function when the sending mobile terminal's user calls the receiving mobile terminal, or an icon or picture stored to corresponding to the sending mobile terminal's user in an address book. In operation 1150, the receiving mobile terminal displays the character on the main screen.

However, if the receiving mobile terminal is determined not to receive and display the schedule information in operation 1130, but instead to store the schedule information, the receiving mobile terminal stores the schedule information in operation 1160.

On the other hand, in operation 1120, the schedule information may be determined not to be new. That is, the schedule information received from the sending mobile terminal in operation 1110 in FIG. 11 may be changed schedule information. In this case, since the receiving mobile terminal may have received previous schedule information from the sending mobile terminal and may have performed the operations 1130 to 1160, the receiving mobile terminal may have displayed a character on the screen or have stored it. Hence, in operation 1170, the receiving mobile terminal determines if a character corresponding to the schedule information of the sending mobile terminal is being displayed on the screen. If the character is determined to be displayed on the screen in operation 1170, the receiving mobile terminal modifies the schedule information according to the changed schedule information in operation 1180. However, if the character is determined not to be displayed on the screen in operation 1170, the receiving mobile terminal sets priorities of schedules in operation 1190.

After displaying the character corresponding to the schedule information as described above, the receiving mobile terminal continuously monitors the schedule information in operation 950 to display the schedule of the sending mobile terminal in real time.

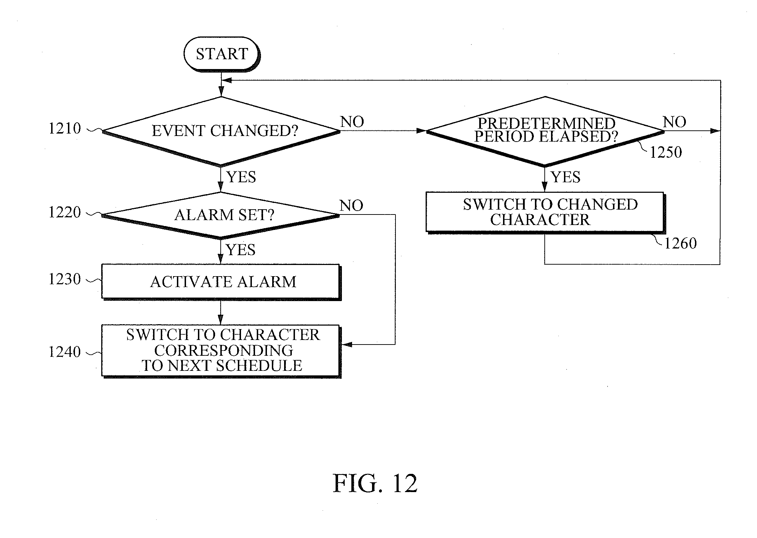

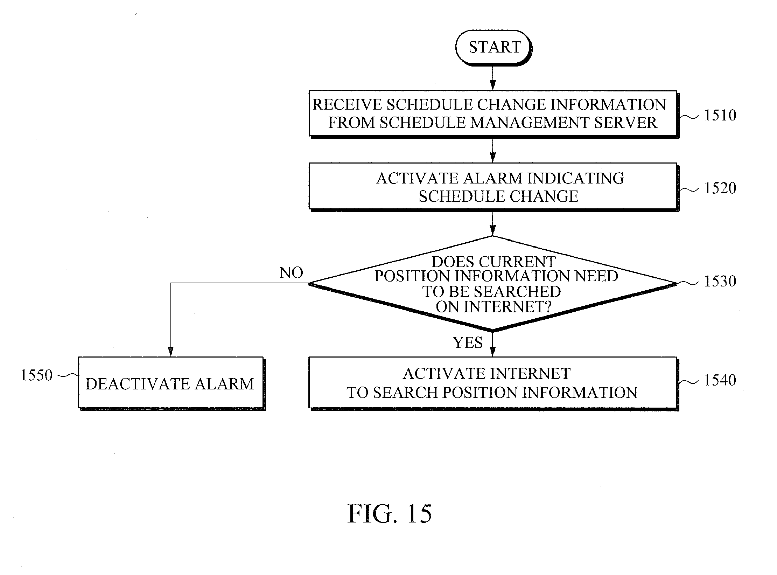

The operation 950 may include operations in FIG. 12 to correspond to a changing event, or include operations in FIG. 15 when information about a changed schedule is received from the schedule management server. FIG. 12 is a flowchart illustrating operation of a receiving mobile terminal in operation 950 in FIG. 9 according to an exemplary embodiment of the present invention.

Specifically, FIG. 12 is a flowchart illustrating operation of displaying a character according to multimedia information set for the character while the character is displayed on a main screen.

Referring to FIG. 12, the receiving mobile terminal displays a character corresponding to a current schedule on a main screen and determines if an event has been changed in operation 1210. If the event is determined to have been changed in operation 1210, the receiving mobile terminal determines if an alarm function is set to be activated for the event in operation 1220. If the alarm function is determined to be set for the event in operation 1220, the alarm is activated in operation 1230. The alarm may be of text, voice, still image or moving image type. In operation 1240, the character is changed to correspond to a next schedule. However, if the event is determined not to have been changed in operation 1210, the receiving mobile terminal selectively displays a changed character in operation 1260 at a predetermined period after the event displayed on the main screen in the form of the character took place. In operation 1250, it is determined if the predetermined period has elapsed.

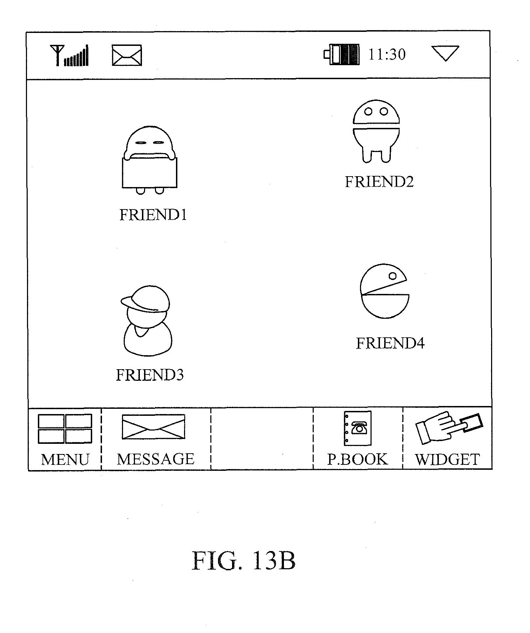

FIG. 13A and FIG. 13B illustrate examples of a screen of a receiving mobile terminal for showing characters which are changed as time elapses. If schedule information of Friend 4 includes a schedule of a meeting between 10 to 12 o'clock in FIG. 13A, a character of Friend 4 may be changed two hours later, after the predetermined period for the scheduled meeting ends, as shown in FIG. 13B.

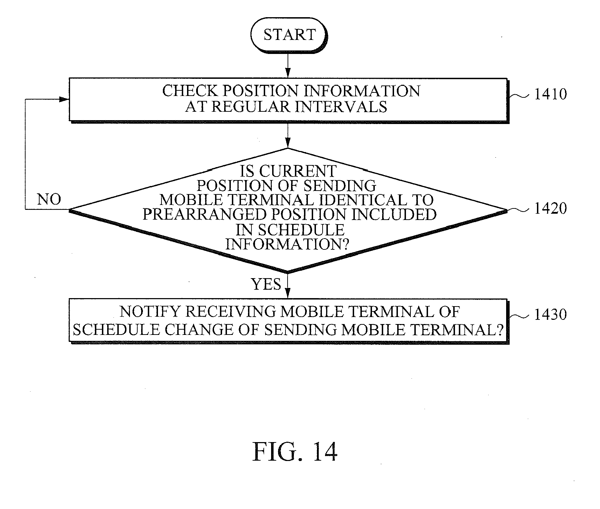

In operation 960, the schedule manger server monitors a current position of the sending mobile terminal. The operation 960 includes operations as shown in FIG. 14. FIG. 14 is a flowchart illustrating operation of a schedule management server in operation 960 in FIG. 9 according to an exemplary embodiment of the present invention

Referring to FIG. 14, in operation 1410, the schedule management server monitors the current position of the sending mobile terminal at regular intervals. In operation 1420, the schedule management server determines if the current position of the sending mobile terminal is identical to or corresponds to prearranged position information included in the schedule information.

If the current position is identical to or corresponds to the prearranged position information, the schedule management server determines that the schedule information of the sending mobile terminal user has not been changed, and performs operation 1410. If the current position is not identical to or does not correspond to the prearranged position information, the schedule management server determines that the schedule information of the sending mobile terminal user has been changed, and notifies the receiving mobile terminal of the change of schedule in operation 1430. In this case, the current position information of the sending mobile terminal may also be transmitted together with the information about the schedule change.

When the receiving mobile terminal receives the information about the schedule change and the current position information from the schedule management server in operation 970 in FIG. 9, the operation 950 may include operations as shown in FIG. 15. FIG. 15 is a flowchart illustrating operation of a receiving mobile terminal in operation 950 in FIG. 9 according to an exemplary embodiment of the present invention.

Referring to FIG. 15, in operation 1510, the receiving mobile terminal receives the information about the schedule change and the current position information. In operation 1520, an alarm is activated to indicate the schedule change, if an alarm function is set for indicating the schedule change. In operation 1530, the receiving mobile terminal determines if a user signal requesting the current position of the sending mobile terminal has been input.

If the user signal has been input, in operation 1540, the receiving mobile terminal may request the position information of the sending mobile terminal. The position information may be searched for and received from the Internet, from the schedule management server, or another source. Although not shown in the drawing, the receiving mobile terminal may provide the sending mobile terminal with information about surrounding areas of the current position of the sending mobile terminal. If the user signal has not been input, the receiving mobile terminal may deactivate the alarm in operation 1550.

According to an exemplary embodiment of the present invention, the receiving mobile terminal may provide information about acquaintances of a sending mobile terminal user.

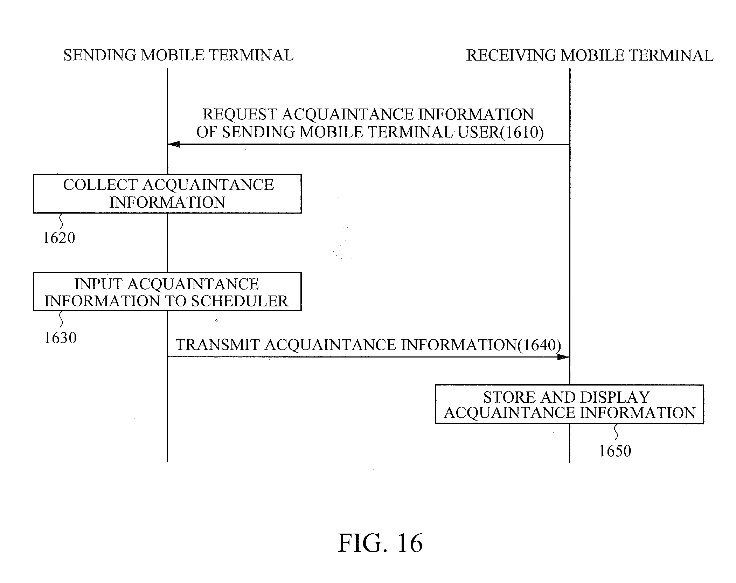

FIG. 16 is a flowchart illustrating a method for sharing schedule information of acquaintances of a user using a sending mobile terminal according to an exemplary embodiment of the present invention.

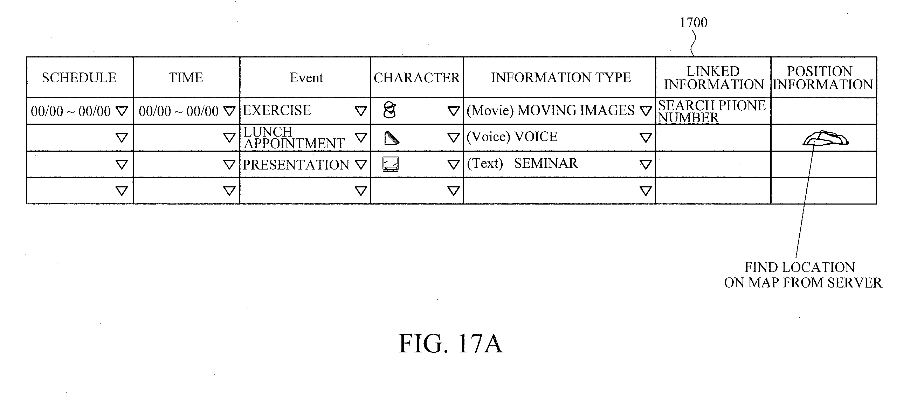

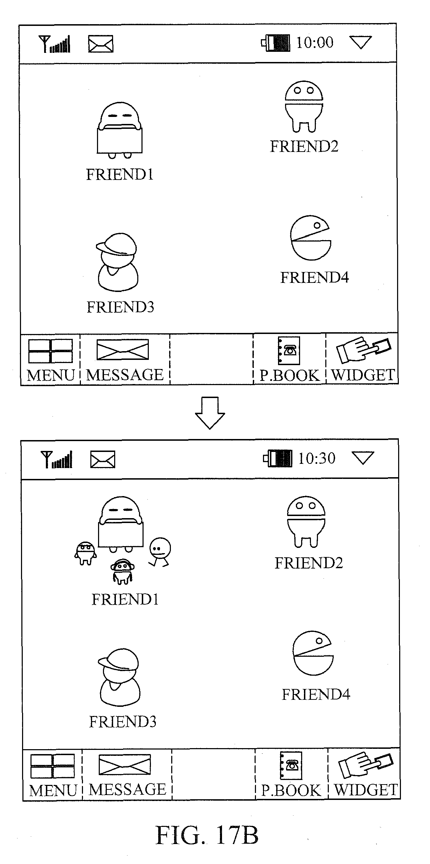

Referring to FIG. 16, in operation 1610, the receiving mobile terminal requests the sending mobile terminal to provide information about acquaintances of the sending mobile terminal user. The acquaintance information may include personal information, schedule information, etc. of the acquaintances. In operation 1620, the sending mobile terminal collects the acquaintance information through IrDA, Bluetooth, Internet, etc. Alternatively or in addition to the collection process, the acquaintance information may be stored or collected previously by the sending mobile terminal. In operation 1630, the sending mobile terminal includes the acquaintance information in the schedule information of the sending mobile terminal user. The acquaintance information is included as linked information 1700 in FIG. 17A. In operation 1640, the sending mobile terminal transmits the schedule information including the acquaintance information. In operation 1650, the receiving mobile terminal receives, stores and displays the acquaintance information of the sending mobile terminal user as shown in FIG. 17B. In FIG. 17B, the Friend 1 character may be displayed together with acquaintance characters of the Friend 1. Further, the schedule information may be configured such that the acquaintance characters are displayed on the receiving mobile terminal for predetermined periods and are not displayed for the other periods.

According to an exemplary embodiment of the present invention, the sending mobile terminal may share schedule information of specific persons, such as celebrities, entertainers or athletes, with other receiving mobile terminals.

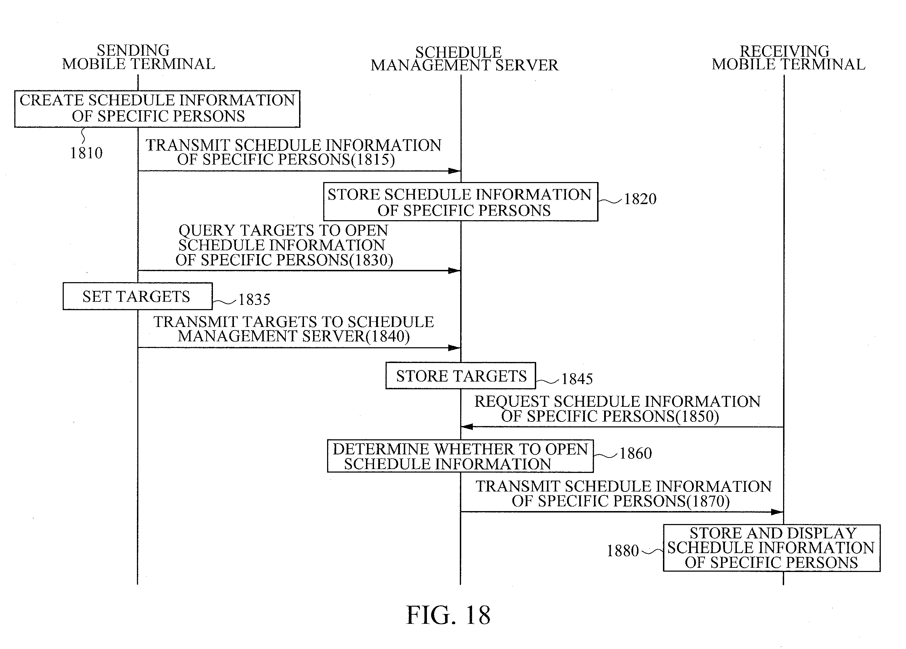

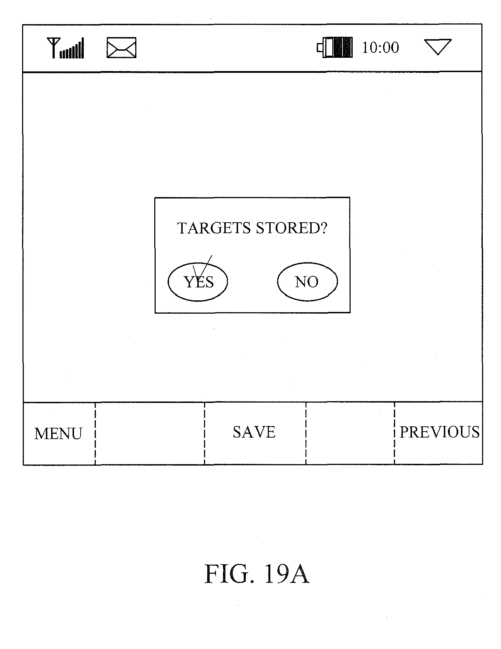

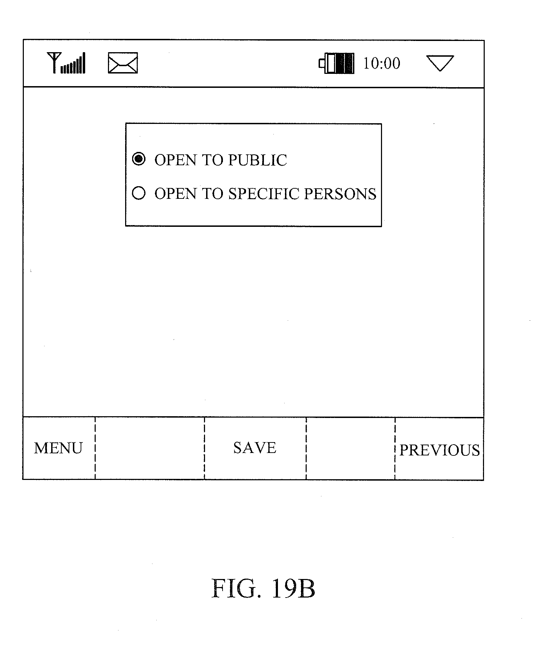

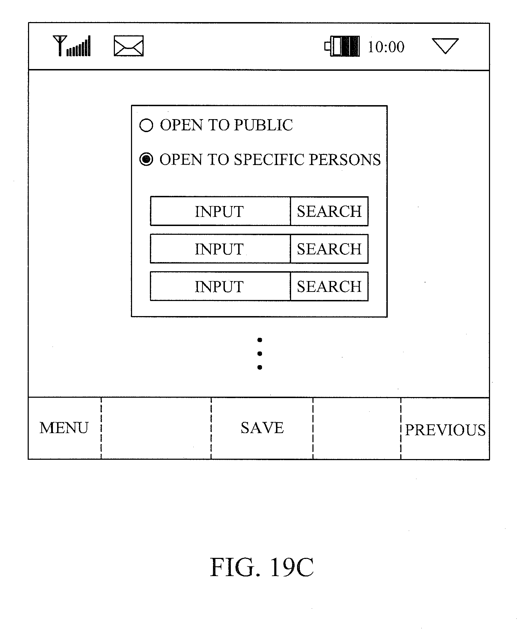

FIG. 18 is a flowchart illustrating a method for sharing schedule information of a specific person according to an exemplary embodiment of the present invention. FIG. 19A, FIG. 19B, and FIG. 19C illustrate examples of a screen of a sending mobile terminal for setting a target to open schedule information of a specific person according to an exemplary embodiment of the present invention.

Referring to FIG. 18, in operation 1810, the sending mobile terminal uses a schedule format, such as the schedule format shown in FIG. 4, to create schedule information of specific persons. In operation 1815, the sending mobile terminal transmits the schedule information to the schedule management server. In operation 1820, the schedule management server stores the schedule information of the specific persons. In operation 1830, the sending mobile terminal queries targets to open the schedule information of the specific persons.

The targets to open the schedule information may be automatically queried after the schedule information is created in operation 1810 and the user presses a key to store the schedule information. In operation 1835, the sending mobile terminal sets the targets, which will be described in more detail with reference to FIGS. 19A and 19B. If the sending mobile terminal selects 'Yes' on a pop-up window asking if the targets are to be stored as shown in FIG. 19A, another pop-up window may be displayed to set the targets as shown in FIG. 19B. If the item 'Open to specific persons' is selected on the pop-up window, the sending mobile terminal displays another pop-up window to input identification information of the specific persons as shown in FIG. 19C. In this case, phone numbers or other identifying information of the specific persons may be input and stored.

In operation 1840, the sending mobile terminal transmits the targets to the schedule management server. In operation 1845, the schedule management server stores the targets.

In operation 1850, the receiving mobile terminal requests the schedule information of the specific persons from the schedule management server. In operation 1860, the schedule management server determines whether to provide the schedule information to the receiving mobile terminal. If the targets are set to be open to the public or to a group including the receiving mobile terminal, the schedule management server provides the schedule information to the receiving mobile terminal. If the targets are set to be open to the specific persons, the schedule management server checks if the receiving mobile terminal falls within the targets.

In operation 1870, the schedule management server selectively transmits the schedule information of the specific persons to the receiving mobile terminal according to the determination in operation 1860.

In operation 1880, the receiving mobile terminal stores and displays the schedule information of the specific persons.

The current embodiments can be implemented as computer readable code in a computer readable recording medium. Code and code segments constituting the computer program can be easily inferred by a skilled computer programmer in the art. The computer readable recording medium includes all types of recording media in which computer readable data are stored. Examples of the computer readable recording medium include a ROM, a RAM, a CD-ROM, a magnetic tape, a floppy disk, and an optical data storage. Further, the recording medium may be implemented in the form of a carrier wave such as Internet transmission. In addition, the computer readable recording medium may be distributed to computer systems over a network, in which computer readable code may be stored and executed in a distributed manner.

As apparent from the above description, it is possible to compare another user's schedule information registered with a web server and a position of the user's mobile terminal. Further, the schedule management server may automatically update the user's schedule information whenever the user's position information is changed.

In addition, since multiple schedules can be transmitted at the same time, a user does not have to transmit the schedules one by one.

Further, it is possible to check in real time another user's schedule information which is represented by characters, such as icons, avatars and pictures, on a screen of the user's mobile terminal.

Further, it is possible to display changed icons of another user's schedule information on the screen, or to provide alarms in a form of a variety of multimedia information, such as moving images, icons, characters, avatars, pictures, voice and text.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
In an apparatus and method for sharing schedule information between mobile terminals, a sending mobile terminal transmits schedule information input by a user to a receiving mobile terminal. A schedule management server monitors a position of the sending mobile terminal according to the schedule information. If the current position of the sending mobile terminal is different from position information included in the schedule information, schedule change information is transmitted to the receiving mobile terminal, which outputs the schedule information.

## Claims

1. A first mobile terminal to share schedule information with a second mobile terminal, comprising:
a communication unit to process communication signals and to receive schedule information of the second mobile terminal;
a display unit to display images; and
a control unit to output the schedule information of the second mobile terminal to the display unit, and to output a signal indicating that the schedule information on the display unit is changed when information about a schedule change of the second mobile terminal is received from a schedule management server.

2. The first mobile terminal of claim 1, further comprising:
a key input unit,
wherein the control unit outputs a schedule format on a screen for a user to input a first schedule, receives schedule information of the first mobile terminal input in the schedule format from the user using the key input unit, and transmits the schedule information to a third mobile terminal,
and, preferably, wherein the schedule format is configured to receive a plurality of schedules, and comprises a selective character input item to input character information corresponding to an event for the first schedule or a position information input item to input position information of the event.

3. The first mobile terminal of claim 2, wherein the schedule format further comprises an acquaintance information input item to input information about an acquaintance including schedule information and personal information of the acquaintance,
and, preferably, wherein the control unit receives acquaintance information of a user of a fourth mobile terminal and outputs the acquaintance information and the schedule information of the fourth mobile terminal to the display unit.

4. The first mobile terminal of claim 2 or 3, wherein the control unit selectively transmits the schedule information of the first mobile terminal to the schedule management server depending on whether the schedule information includes position information.

5. The first mobile terminal of any of claims 2 to 4, wherein the control unit outputs a character corresponding to an event for a current schedule included in the schedule information of the second mobile terminal to the display unit,
and, preferably, wherein when receiving information about the schedule change from the schedule management server, the control unit outputs a visible or audible alarm signal using a character representing a schedule of the second mobile terminal.

6. The first mobile terminal of any of claims 1 to 5, wherein the control unit receives priority information associated with the schedule information of the second mobile terminal.

7. The first mobile terminal of any of claims 1 to 6, wherein the control unit creates schedule information of a specific person, sets a target to open the schedule information of the specific person, and transmits the target to the schedule management server.

8. The first mobile terminal of any of claims 1 to 7, wherein the schedule management server monitors a status of the second mobile terminal and transmits the information about the schedule change to the first mobile terminal if the status of the sending mobile terminal is different from status information included in the schedule information,
and, preferably, wherein the schedule management server monitors the status of the second mobile terminal in real time, the status of the second mobile terminal preferably comprising a current position of the second mobile terminal.

9. The first mobile terminal of any of claims 1 to 8, wherein the schedule management server monitors a status of the second mobile terminal in real time and transmits the information about the schedule change to the first mobile terminal at an end-time of an event corresponding to the schedule information.

10. A schedule management server to share schedule information between mobile terminals in a mobile communication system, comprising:
a schedule information registering module to register first schedule information received from a sending mobile terminal; and
a position monitoring module to monitor a position of the sending mobile terminal and to transmit schedule change information to a receiving mobile terminal if the position of the sending mobile terminal is different from position information included in the first schedule information.

11. The schedule management server of claim 10, wherein the position monitoring module further transmits position information of the sending mobile terminal to the receiving mobile terminal.

12. The schedule management server of claim 10 or 11, further comprising:
a schedule information sending module to transmit the first schedule information of the sending mobile terminal to the receiving mobile terminal,
wherein the first schedule information comprises information including a priority of schedules set for an overlapping time,
and, preferably, wherein if a current position of the sending mobile terminal is different from position information corresponding to a top priority schedule in the first schedule information, the position monitoring module sends second schedule information including a second priority schedule to the receiving mobile terminal.

13. A method for sharing schedule information of a mobile terminal, comprising:
displaying a first character representing a first schedule of a sending mobile terminal on a screen when schedule information of the sending mobile terminal is received; and
outputting through the first character a signal indicating that the schedule information is changed when information about a change in the first schedule of the sending mobile terminal is received from a schedule management server.

14. The method of claim 13, further comprising switching to a second character corresponding to a second schedule of the sending mobile terminal when the schedule information is changed,
and, preferably, further comprising:
requesting acquaintance information from the sending mobile terminal, the acquaintance information comprising information about an acquaintance of a user of the sending mobile terminal, the information about the acquaintance comprising schedule information and personal information of the acquaintance; and
receiving the acquaintance information and outputting the acquaintance information and the schedule information of the sending mobile terminal.

15. A method for sharing schedule information between mobile terminals in a mobile communication system, comprising:
registering schedule information received from a sending mobile terminal;
monitoring a position of the sending mobile terminal; and
transmitting schedule change information to a receiving mobile terminal when the position of the sending mobile terminal is different from position information included in the schedule information.

16. The method of claim 22, wherein the position information of the sending mobile terminal is transmitted to the receiving mobile terminal,
and/or wherein transmitting the schedule change information to the receiving mobile terminal comprises sending schedule information including a second priority schedule to the receiving mobile terminal if the position of the sending mobile terminal is different from position information corresponding to a first priority schedule included in the registered schedule information.
